(19) **Europäisches Patentamt / European Patent Office / Office européen des brevets**

(11) **EP 4 574 611 B1**

(12) **EUROPEAN PATENT SPECIFICATION**

(45) Date of publication and mention
of the grant of the patent:
**15.04.2026 Bulletin 2026/16**

(21) Application number: **23217683.4**

(22) Date of filing: **18.12.2023**

(51) International Patent Classification (IPC):
**B60W 40/10** (2012.01)

(52) Cooperative Patent Classification (CPC):
**B60W 40/10;** B60W 2300/14; B60W 2520/105;
B60W 2520/125; B60W 2530/10; B60W 2530/203;
B60W 2530/205; B60W 2530/207; B60W 2720/22;
B60Y 2200/147; B60Y 2200/148

(54) **MOTION INFORMATION FOR VEHICLE COMBINATIONS**

BEWEGUNGSINFORMATIONEN FÜR FAHRZEUGKOMBINATIONEN

INFORMATIONS DE MOUVEMENT POUR COMBINAISONS DE VÉHICULES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.06.2025 Bulletin 2025/26**

(73) Proprietor: **VOLVO TRUCK CORPORATION
405 08 Göteborg (SE)**

(72) Inventors:
• **GELSO, Esteban
421 51 VÄSTRA FRÖLUNDA (SE)**
• **SADEGHI KATI, Maliheh
433 51 ÖJERSJÖ (SE)**
• **ESSAYEH, Salmane
411 34 GÖTEBORG (SE)**

(74) Representative: **Ström & Gulliksson AB
P.O. Box 4188
203 13 Malmö (SE)**

(56) References cited:
• **AMIN HABIBNEJAD KORAYEM: "State and
Parameter Estimation of Vehicle-Trailer
Systems", 5 March 2021 (2021-03-05),
XP093159206, Retrieved from the Internet
<URL:https://uwspace.uwaterloo.ca/bitstream/
handle/10012/16842/HabibnejadKorayem_Amin.
pdf?sequence=3&isAllowed=y>**

• **XIA GUANG ET AL: "State Estimation and
Application of the Hitch Angle of a Semitrailer
Train Under Full Working Conditions Based on
Multimodel Information Fusion", IEEE
TRANSACTIONS ON VEHICULAR
TECHNOLOGY, IEEE, USA, vol. 71, no. 5, 24
February 2022 (2022-02-24), pages 4748 - 4763,
XP011908718, ISSN: 0018-9545, [retrieved on
20220224], DOI: 10.1109/TVT.2022.3153062**
• **LIANG CHU ET AL: "Estimation of Articulation
Angle for Tractor Semi-trailer Based on State
Observer", 2010 INTERNATIONAL
CONFERENCE ON MEASURING TECHNOLOGY
AND MECHATRONICS AUTOMATION : ICMTMA
2010 ; CHANGSHA CITY, CHINA, 13 - 14 MARCH
2010, IEEE, PISCATAWAY, NJ, USA, 13 March
2010 (2010-03-13), pages 158 - 163,
XP031673229, ISBN: 978-1-4244-5001-5**

Description

## TECHNICAL FIELD

The disclosure relates generally to vehicle control. In particular aspects, the disclosure relates to motion information for vehicle combinations. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

The absence of state measurement for the trailing units in the traditional vehicle combination setup poses a significant safety concern. Without real-time data on signals such as accelerations, coupling forces and articulation angles, ensuring a safe envelope of motion for the vehicle combination becomes a challenging task. This lack of information not only hinders the driver's ability to precisely gauge the trailer unit's stability, but also severely limits the effectiveness of safety functionalities. As a result, critical situations such as trailer swing or roll-over become harder to predict and avoid, potentially leading to hazardous incidents on the road. In cases where state measurement for trailing units is available, there is still a need to check the quality of the measurement (detection of faulty values) and to provide reliable values in e.g. safety critical autonomous applications.

It is therefore desired to provide systems, methods and other approaches that attempt to resolve or at least mitigate one or more of these issues.

"State and Parameter Estimation of Vehicle-Trailer Systems" by Amin Habibnejad Korayem, 5 March 2021, University of Waterloo, Ontario, Canada discloses real-time state and parameter estimation algorithms for vehicle-trailer systems. An overview of different model-based and non-model based techniques is provided, and the possibilities of trailer state and parameter estimation for different possible vehicle-trailer on-board sensor settings are investigated.

"State Estimation and Application of the Hitch Angle of a Semitrailer Train Under Full Working Conditions Based on Multimodel Information Fusion" by Guang Xia et al, IEEE Transactions on Vehicular Technology, IEEE, USA, vol. 71, no. 5, 24 February 2022 discloses a determination that the cause of failure of traditional hitch angle estimation methods is nonlinear disturbance. The difference in this disturbance under two conditions is analysed, and an estimation strategy is proposed to estimate the classification of forward low-speed, highspeed, and reverse conditions.

"Estimation of Articulation Angle for Tractor Semi-trailer Based on State Observer" by Liang Chu et al, 2010 International Conference on Measuring Technology and Mechatronics Automation, 13 March 2010, discloses a state observer designed to estimate the articulation angle of a tractor semi-trailer combination. A 3-degree-of-freedom tractor semi-trailer linear model is used. Signals from steering wheel angle sensors, a lateral acceleration sensor, a yaw rate sensor and an axle load sensor of an electronic stability control system for a commercial vehicle are used in the state observer. A road adhesion coefficient is estimated with lateral acceleration to correct a linear tyre model.

## SUMMARY

This disclosure provides systems, methods and other approaches for determining motion information for a vehicle combination comprising a tractor unit and one or more trailer units. In particular, a computer system is provided comprising processing circuitry configured to acquire certain parameters relating to a first unit and a second unit of a vehicle combination. Based on the acquired parameters, a new set of parameters relating to the second unit can be determined. In particular, an articulation angle between the first unit and the second unit can be determined. Longitudinal and lateral coupling forces between the units, and longitudinal and lateral accelerations of the second unit, can also be determined.

According to a first aspect of the disclosure, there is provided a computer system comprising processing circuitry configured to acquire a first set of parameters relating to a first unit of a vehicle combination, the first set of parameters comprising a longitudinal acceleration of the first unit, a lateral acceleration of the first unit, a yaw rate of the first unit, and a first distance between the centre of gravity of the first unit and a coupling point between the first unit and a second unit of the vehicle combination, acquire a second set of parameters relating to the second unit, the second set of parameters comprising a longitudinal tyre force of the second unit, a mass of the second unit, and a second distance between the centre of gravity of the second unit and the coupling point, acquire a longitudinal coupling force and a lateral coupling force between the first unit and the second unit, and determine an articulation angle between the first unit and the second unit based on the acquired first set of parameters, second set of parameters, longitudinal coupling force, and lateral coupling force.

The first aspect of the disclosure seeks to provide an estimation of second unit states based on signals from a first unit. A technical benefit may include that the newly determined parameters can be used as an input to a "soft" inertial measurement unit (IMU) or to provide a backup system in case of communication problems. This can also function as a redundant system and can be used to verify corresponding parameters of a separate system. This increases the reliability of measurements and provides a solution for fault detection and mitigation, meaning that safe operation of vehicle combinations can be ensured. In particular, these approaches further open the possibility for safety critical autonomous applications.

Optionally in some examples, including in at least one preferred example, the first set of parameters further comprises a yaw acceleration of the first unit, and the processing circuitry is further configured to determine a longitudinal acceleration of the second unit and/or a lateral acceleration of the second unit based on the acquired first set of parameters, the acquired second set of parameters, and the determined articulation angle. A technical benefit may include the provision of further parameters, in particular acceleration of a second unit, that may otherwise not be available.

Optionally in some examples, including in at least one preferred example, the processing circuitry is configured to determine a longitudinal acceleration of the second unit based on the determined articulation angle, the longitudinal acceleration of the first unit, the lateral acceleration of the first unit, the yaw acceleration of the first unit, and the first distance. A technical benefit may include the provision of further parameters, in particular a longitudinal acceleration of a second unit, that may otherwise not be available.

Optionally in some examples, including in at least one preferred example, the processing circuitry is configured to determine a lateral acceleration of the second unit based on the determined articulation angle, the longitudinal acceleration of the first unit, the lateral acceleration of the first unit, the yaw acceleration of the first unit, the distance between the centre of gravity of the first unit and the coupling point, and the second distance. A technical benefit may include the provision of further parameters, in particular a lateral acceleration of a second unit, that may otherwise not be available.

Optionally in some examples, including in at least one preferred example, the processing circuitry is further configured to use the longitudinal coupling force, the lateral coupling force, the articulation angle, the longitudinal acceleration of the second unit and/or the lateral acceleration of the second unit as an input to an inertial measurement unit, IMU, for motion management of the vehicle combination. A technical benefit may include the provision of a backup IMU backup in case of a communication problem between IMUs of the individual units, or failure or low accuracy of a primary IMU of the vehicle.

Optionally in some examples, including in at least one preferred example, the processing circuitry is configured to use the longitudinal coupling force, the lateral coupling force, the articulation angle, the longitudinal acceleration of the second unit and/or the lateral acceleration of the second unit to verify corresponding parameters of a separate vehicle motion or localization unit, a primary IMU of the vehicle combination, or global navigation satellite system, GNSS, based sensor equipment. A technical benefit may include an increase in the reliability of measurements and the provision of a solution for fault detection and mitigation, meaning that safe operation of vehicle combinations can be ensured

Optionally in some examples, including in at least one preferred example, the processing circuitry is configured to acquire the longitudinal coupling force and the lateral coupling force by acquiring a sum of longitudinal tyre forces of the first unit, a sum of lateral tyre forces of the first unit, and a mass of the first unit, and determining the longitudinal coupling force and the lateral coupling force based on the acquired longitudinal acceleration of the first unit, lateral acceleration of the first unit, sum of longitudinal tyre forces, sum of lateral tyre forces, and mass of the first unit. A technical benefit may include the provision of further parameters, in particular a coupling forces between units, that may otherwise not be available.

Optionally in some examples, including in at least one preferred example, the processing circuitry is configured to acquire at least some of the first set of parameters from a sensor system of the first unit of the vehicle combination. A technical benefit may include provision of further parameters that may otherwise not be available based on existing infrastructure of the vehicle combination.

Optionally in some examples, including in at least one preferred example, the processing circuitry is configured to acquire the longitudinal tyre force of the second unit from a braking system and/or propulsion system of the second unit. A technical benefit may include provision of further parameters that may otherwise not be available based on existing infrastructure of the vehicle combination.

Optionally in some examples, including in at least one preferred example, the computer system is an electronic control unit, ECU, of the first unit, and the longitudinal coupling force, the lateral coupling force, the articulation angle, the longitudinal acceleration of the second unit and/or the lateral acceleration of the second unit are stored in a memory associated with the ECU of the first unit. A technical benefit may include ensuring the availability of parameters of the second unit even when communication is hindered.

Optionally in some examples, including in at least one preferred example, the computer system is an electronic control unit, ECU, of the second unit, wherein the processing circuitry is configured to use the longitudinal coupling force, the lateral coupling force, the articulation angle, the longitudinal acceleration of the second unit and/or the lateral acceleration of the second unit as a redundancy for determination of parameters by the second unit. A technical benefit may include the provision of a redundancy for determination of parameters by the second unit.

According to a second aspect of the disclosure, there is provided a vehicle comprising the computer system. The second aspect of the disclosure may seek to provide a vehicle for which estimation of second unit parameters that may otherwise not be available is provided.

According to a third aspect of the disclosure, there is provided a computer-implemented method comprising acquiring, by processing circuitry of a computer system, a first set of parameters relating to a first unit of a vehicle combination, the first set of parameters comprising a longitudinal acceleration of the first unit, a lateral acceleration of the first unit, a yaw rate of the first unit, and a distance between the centre of gravity of the first unit and a coupling point between the first unit and the second unit, acquiring, by the processing circuitry, a second set of parameters relating to a second unit of the vehicle combination, the second set of parameters comprising a longitudinal tyre force of the second unit, a mass of the second unit, and a distance between the centre of gravity of the second unit and the coupling point, and acquiring, by the processing circuitry, a longitudinal coupling force and a lateral coupling force between the first unit and the second unit, and determining, by the processing circuitry, an articulation angle between the first unit and the second unit based on the acquired first set of parameters, second set of parameters, longitudinal coupling force, and lateral coupling force.

The third aspect of the disclosure may seek to provide an estimation of second unit states based on signals from a first unit. A technical benefit may include that the newly determined parameters can be used as an input to a "soft" inertial measurement unit (IMU) or to provide a backup system in case of communication problems. This can also function as a redundant system and can be used to verify corresponding parameters of a separate system. This increases the reliability of measurements and provides a solution for fault detection and mitigation, meaning that safe operation of vehicle combinations can be ensured. In particular, these approaches further open the possibility for safety critical autonomous applications.

According to a fourth aspect of the disclosure, there is provided a computer program product comprising program code for performing, when executed by processing circuitry, the computer-implemented method. A technical benefit may include that new vehicles and/or legacy vehicles may be conveniently configured, by software installation/update, to benefit from estimation of second unit parameters that may otherwise not be available.

According to a fifth aspect of the disclosure, there is provided a non-transitory computer-readable storage medium comprising instructions, which when executed by processing circuitry, cause the processing circuitry to perform the computer-implemented method. A technical benefit may include that new vehicles and/or legacy vehicles may be conveniently configured, by software installation/update, to benefit from estimation of second unit parameters that may otherwise not be available.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** schematically shows a top view of a vehicle combination according to an example.
**FIG. 2** is a flow chart of a computer-implemented method according to an example.
**FIG. 3** is a schematic diagram of a computer system for implementing examples disclosed herein.

Like reference numerals refer to like elements throughout the description.

## DETAILED DESCRIPTION

The detailed description set forth below provides information and examples of the disclosed technology with sufficient detail to enable those skilled in the art to practice the disclosure.

The absence of state measurement for the trailing units in the traditional vehicle combination setup poses a significant safety concern. Without real-time data on signals such as accelerations, coupling forces and articulation angles, ensuring a safe envelope of motion for the vehicle combination becomes a challenging task. This potentially leads to hazardous incidents on the road. In cases where state measurement for trailing units is available, there is still a need to check the quality of the measurement and to provide reliable values.

To remedy this, systems, methods and other approaches are provided for determining motion information for vehicle combinations. A computer system is provided comprising processing circuitry configured to acquire certain parameters relating to a first unit and a second unit of a vehicle combination. Based on the acquired parameters, a new set of parameters relating to the second unit can be determined. As such, the approaches disclosed herein may aim to provide an estimation of trailing unit parameters based on signals from a tractor unit. In particular, an articulation angle between the first unit and the second unit can be determined. Longitudinal and lateral coupling forces between the units, and longitudinal and lateral accelerations of the second unit, can also be determined.

By determining a set of parameters relating to the second unit in this way, they can be used as an input to a "soft" inertial measurement unit (IMU) in the case that the second unit does not provide any measurements, which is often the case in traditional vehicle combinations. For example, a soft IMU could be implemented in a control unit in the first unit, and could therefore be a backup method in case of a communication problem between an IMU in the second unit and the first unit, or failure or low accuracy of a primary IMU of the vehicle. This can also function as a redundant system when the trailer unit possesses an individual IMU. The determined parameters can be used to verify corresponding parameters of a separate vehicle motion or localization unit, a primary IMU of the vehicle, or global navigation satellite system (GNSS) based sensor equipment. This increases the reliability of measurements and provides a solution for fault detection and mitigation, meaning that safe operation of vehicle combinations can be ensured. In particular, these approaches further open the possibility for safety critical autonomous applications.

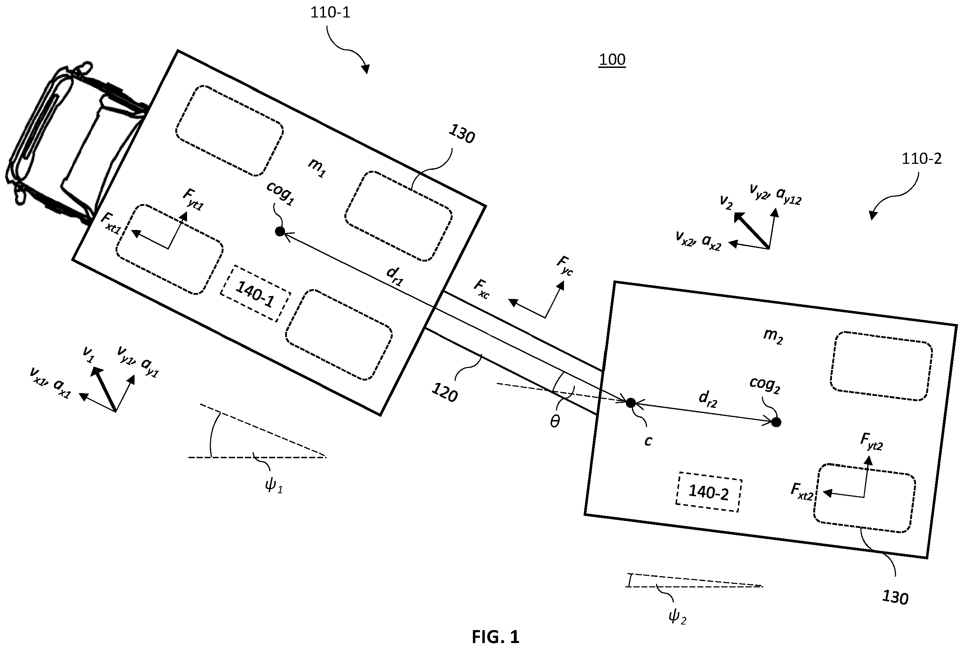

**FIG. 1** schematically shows a top view of an example vehicle combination **100** of the type considered in this disclosure. The vehicle combination **100** comprises a number of units **110,** including a tractor unit **110-1** and a trailing unit **110-2** connected by a coupling **120.** Whilst a single trailing unit **110-2** is shown, it will be appreciated that the vehicle combination **100** may comprise further trailing units. This gives rise to different types and designations of vehicle combinations.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power for the vehicle combination **100.** In the example of **FIG. 1,** the tractor unit **110-1** may also be used to store goods that are being transported by the vehicle combination **100.**

A trailing unit, such as the trailing unit **110-2,** is generally used to store goods that are being transported by the vehicle combination **100.** A trailing unit may be a truck, trailer, dolly and the like. A trailing unit may also provide propulsion to the vehicle combination **100.** In vehicle combinations such as that shown in **FIG. 1,** vehicle motion management may be available on a unit level to receive requests from a manual or virtual driver to coordinate the propulsion, braking and steering.

Each unit **110** comprises a number of axles, each having a number of wheels **130.** It will be appreciated that any suitable number of axles may be provide on the respective units **110.** A trailing unit **110-2** without a front axle is known as a semi-trailer. It will also be appreciated that any number of the tractor axles and/or trailer axles may be driven axles, including zero (i.e. one of the units **110** may include at least one driven axle while the other does not).

Each unit **110** may also comprise a control unit **140.** Each control unit **140** may be a vehicle control unit configured to perform various vehicle control functions, such as vehicle motion management. One function of the control units **140** is to provide control inputs for the vehicle combination **100,** for example motion requests for the wheels **130.** For example, each control unit **140** may be configured to control components of its respective unit **110,** such as electrical machines, service brakes, suspension systems, steering systems, and the like, in order to implement the motion requests. These motion requests may relate to a requested manoeuvre for the vehicle combination **100,** for example, straight-line driving, cornering, braking and the like.

In some implementations, the control unit **140-1** of the tractor unit **110-1** may be considered as the primary electronic control unit (ECU) of the vehicle combination **100,** and may provide control signals for each unit. In some embodiments, a primary ECU may be implemented elsewhere in the vehicle combination **100,** or may be a remote computer system, implemented at a distance from the vehicle combination **100.** The control units **140** may be communicatively coupled in any suitable way, for example via a circuit or any other wired, wireless, or network connection known in the art. Furthermore, the communicative coupling may be implemented as a direct connection between the control units **140,** or may be implemented as a connection via one or more intermediate entities. The control units **140** may be implemented as code running on a processing circuitry, or similar. The control units **140** may comprise processing circuitry configured to implement various operations disclosed below. The control units **140** may may include a memory storing instructions that, when executed by processing circuitry, cause the processing circuitry to perform the various operations.

**FIG. 1** also shows various parameters of the vehicle combination **100.** For example, each unit **110** has a respective mass $m$ and a centre of gravity *cog*. The units **110** are coupled at a coupling point c. As such, each unit **110** has a respective distance dr between its centre of gravity *cog* and the coupling point c. The angle between the longitudinal axes of the respective units **110** is known as the articulation angle $\theta$ of the vehicle combination **100.** Furthermore, a coupling force is present in the coupling **120** between the units. The coupling force can be considered as two components: a longitudinal coupling force $F_{xc}$ and a lateral coupling force $F_{yc}$.

**FIG. 1** also shows various parameters of the individual units **110.** For example, each unit **110** has a respective velocity v which can be considered as two components: a longitudinal velocity $v_x$ and a lateral velocity $v_y$. Similarly, the acceleration of each unit can be considered as two components, a longitudinal acceleration $a_x$ and a lateral acceleration $a_y$. Each unit **110** has a respective yaw angle $\psi$, which is the angle between an environmental reference frame and the vehicle reference frame. The wheels **130** of each unit may also be subject to a tyre force $F_t$, which can also be considered as two components: a longitudinal tyre force $F_{xt}$ and a lateral tyre force $F_{yt}$. In the present disclosure, the tyre forces for each unit **110** are considered as a total force across all wheels **130**, i.e. a sum of the individual tyre forces for all individual wheels **130**.

As such, the following parameters are considered for the vehicle combination **100**:

- Mass $m_1$ of the tractor unit **110-1**
- Mass $m_2$ of the trailing unit **110-2**
- Distance $dr_1$ between centre of gravity $cog_1$ of the tractor unit **110-1** and the coupling point c
- Distance $dr_2$ between centre of gravity $cog_2$ of the trailing unit **110-2** and the coupling point c
- Articulation angle $\theta$ between the tractor unit **110-1** and the trailing unit **110-2** (as well as articulation angular rate $\dot{\theta}$)
- Longitudinal coupling force $F_{xc}$ between the tractor unit **110-1** and the trailing unit **110-2**
- Lateral coupling force $F_{yc}$ between the tractor unit **110-1** and the trailing unit **110-2**
- Longitudinal velocity $v_{x1}$ of the tractor unit **110-1**
- Lateral velocity $v_{y1}$ of the tractor unit **110-1**
- Longitudinal velocity $v_{x2}$ of the trailing unit **110-2**
- Lateral velocity $v_{y2}$ of the trailing unit **110-2**
- Longitudinal acceleration $a_{x1}$ of the tractor unit **110-1**
- Lateral acceleration $a_{y1}$ of the tractor unit **110-1**
- Longitudinal acceleration $a_{x2}$ of the trailing unit **110-2**
- Lateral acceleration $a_{y2}$ of the trailing unit **110-2**
- Yaw angle $\psi_1$ (as well as yaw rate $\dot{\psi}_1$ and yaw acceleration $\ddot{\psi}_1$) of the tractor unit **110-1**
- Yaw angle $\psi_2$ (as well as yaw rate $\dot{\psi}_2$ and yaw acceleration $\ddot{\psi}_2$) of the trailing unit **110-2**
- Longitudinal tyre force $F_{xt1}$ of the tractor unit **110-1**
- Lateral tyre force $F_{yt1}$ of the tractor unit **110-1**
- Longitudinal tyre force $F_{xt2}$ of the trailing unit **110-2**
- Lateral tyre force $F_{yt2}$ of the trailing unit **110-2**

As discussed above, in some implementations, not all of these parameters are readily available. For example, real-time data on signals such as accelerations, coupling forces and articulation angles may not be provided, making it challenging to ensure a safe envelope of motion for the vehicle combination **100**. This can be a result of the absence of state measurement for the trailing unit **110-2**. However, even in cases where state measurement for the trailing unit **110-2** is available, there is still a need to check the quality of the measurement and to provide reliable values. This is addressed in the present disclosure by the estimation of the previously unknown parameters based on those that are already available.

To do this, a number of motion equations for the vehicle combination **100** can be used. For the tractor unit **110-1**, the following dynamic equations are used:

$$ m_1 a_{x1} = F_{xt1} + F_{xc} \qquad (1) $$

$$ m_1 a_{y1} = F_{yt1} + F_{yc} \qquad (2) $$

For the trailer unit **110-2**, the following dynamic equations are used:

$$ m_2 a_{x2} \;= F_{xt2} - \left( F_{xc}\,cos\theta - F_{yc}\,sin\theta \right) \qquad (3) $$

$$ m_2 a_{y2} = F_{yt2} - \left( F_{xc}\,sin\theta + F_{yc}\,cos\theta \right) \qquad (4) $$

The kinematic constraint equations between the tractor unit 110-1 and the trailer unit **110-2** are as follows:

$$ v_{x2} = v_{x1}\,cos\theta - \left( v_{y1} - dr_1\,\dot{\psi}_1 \right) sin\theta \qquad (5) $$

$$ v_{y2} = v_{x1}\,sin\theta + \left( v_{y1} - dr_1\,\dot{\psi}_1 \right) cos\theta - dr_2\dot{\psi}_2 \qquad (6) $$

Differentiating the kinematic constraint equations (5) and (6) gives:

$$a_{x2} = a_{x1}\cos\theta - v_{x1}\sin\theta \cdot \dot\theta - a_{y1}\sin\theta - v_{y1}\cos\theta \cdot \dot\theta + dr_1\ddot\psi_1\sin\theta \\ + dr_1\dot\psi_1\cos\theta \cdot \dot\theta \tag{7}$$

$$a_{y2} = a_{x1}\sin\theta + v_{x1}\cos\theta \cdot \dot\theta + a_{y1}\cos\theta - v_{y1}\sin\theta \cdot \dot\theta - dr_1\cos\theta\ddot\psi_1 \\ + dr_1\dot\psi_1\dot\theta\sin\theta - dr_2\ddot\psi_2 \tag{8}$$

Equations (1) to (8) can be used to determine a number of unknown parameters for the vehicle combination **100,** as will be discussed below.

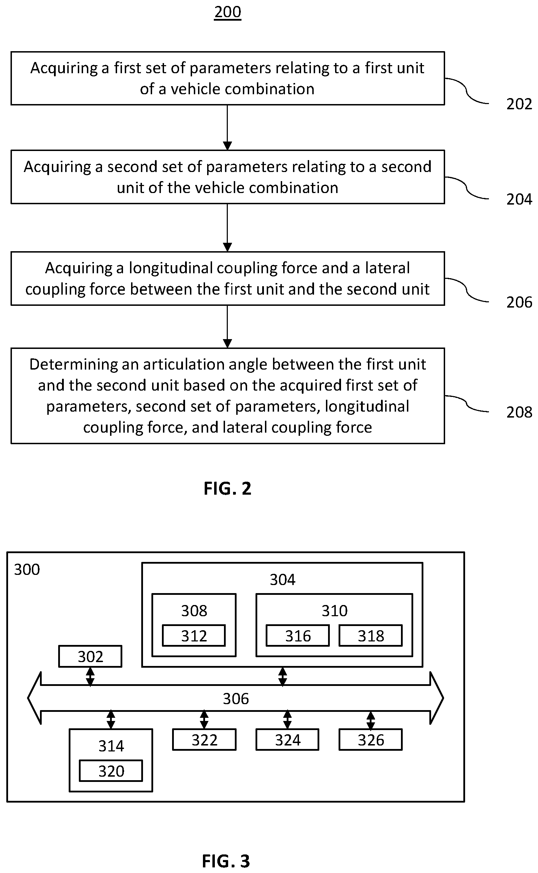

**FIG. 2** is a flow chart of a computer-implemented method **200** according to an example. The method **200** may be implemented by processing circuitry of one or more of the control units **140** of the vehicle combination **100,** or by processing circuitry of a remote computer system. Whilst the method **200** is described in relation to the vehicle combination **100** of **FIG. 1,** including a tractor unit **110-1** and a trailing unit **110-2,** it will be appreciated that the vehicle combination **100** may comprise further trailing units, to which similar principles may be applied.

At **202,** a first set of parameters relating to a first unit **110** of a vehicle combination **100** is acquired. In the example of **FIG. 1,** the first set of parameters relates to the tractor unit **110-1.** In particular, the first set of parameters comprises the longitudinal acceleration $a_{x1}$ of the tractor unit **110-1,** the lateral acceleration $a_{y1}$ of the tractor unit **110-1,** the yaw rate $\dot\psi_1$ of the tractor unit **110-1,** and the distance $dr_1$ between centre of gravity $cog_1$ of the tractor unit **110-1** and the coupling point c.

At least some of the first set of parameters may be acquired from a sensor system of the tractor unit **110-1.** For example, the tractor unit **110-1** may comprise wheel speed sensors, inertial measurement units, and the like, which enable one, more, or all of the first set of parameters to be determined. Certain information, for example the distance $dr_1$, may be predetermined and may be stored in a database.

**At 204,** a second set of parameters relating to a second unit **110** of the vehicle combination **100** is acquired. In the example of **FIG. 1,** the second set of parameters relates to the trailing unit **110-2.** In particular, the second set of parameters comprises the longitudinal tyre force $F_{xt2}$ of the trailing unit **110-2,** the mass $m_2$ of the trailing unit **110-2,** and the distance $dr_2$ between centre of gravity $cog_2$ of the trailing unit **110-2** and the coupling point c.

The longitudinal tyre force $F_{xt2}$ may be determined from a braking system and/or propulsion system of the trailing unit **110-2.** For example, in the case of a braking system, the braking force may be estimated from the a pressure sent to the trailing unit **110-2** and an axle load. In the case of a propulsion system, the torque input can be used with other relevant information to determine the force at the tyre level. Certain information, for example the mass m2 and the distance dr2, may be predetermined and may be stored in a database.

At 206, the longitudinal coupling force Fxc and the lateral coupling force Fyc between the tractor unit **110-1** and the trailing unit **110-2** are acquired. In some examples, the coupling forces $F_{xc}$ and $F_{yc}$ may be acquired from a sensor system associated with the coupling **120.** In other examples, the coupling forces $F_{xc}$ and $F_{yc}$ may be determined using equations (1) and (2), as will be discussed below.

At **208,** the articulation angle $\theta$ between the tractor unit **110-1** and the trailing unit **110-2** is determined based on the first set of parameters, the second set of parameters, and the coupling forces $F_{xc}$ and $F_{yc}$. In particular, equations (1) to (8) can be used to determine the articulation angle $\theta$ as follows. The articulation angle $\theta$ can be expressed as:

$$\theta = \psi_1 - \psi_2 \tag{9}$$

If it is assumed that the articulation angular rate $\dot\theta$ small, then:

$$\dot\theta << 1 \quad \Rightarrow \dot\psi_1 - \dot\psi_2 << 1 \tag{10}$$

$$\Rightarrow \dot\psi_1 \approx \dot\psi_2 \tag{11}$$

Therefore, equations (7) and (8) can be formulated as follows:

$$a_{x2} = a_{x1}\cos\theta - a_{y1}\sin\theta + dr_1\ddot\psi_1\sin\theta \tag{12}$$

$$a_{y2} = a_{x1}\sin\theta + a_{y1}\cos\theta - dr_1\ddot\psi_1\cos\theta - dr_2\ddot\psi_1 \tag{13}$$

Equations (1) and (2) can be formulated as follows:

$$F_{xc} = m_1 a_{x1} - F_{xt1} \qquad (14)$$

$$F_{yc} = m_1 a_{y1} - F_{y1} \qquad (15)$$

Then, injecting equation (12) into equation (3) gives:

$$m_2 a_{x1} cos\theta - m_2 a_{y1} sin\theta + m_2 dr_1 \dot{\psi}_1 sin\theta = F_{xt2} - F_{xc} cos\theta + F_{yc} sin\theta \qquad (16)$$

$$(m_2 a_{x1} + F_{xc})cos\theta - (m_2 a_{y1} + F_{yc} - m_2 dr_1 \dot{\psi}_1)sin\theta = F_{xt2} \qquad (17)$$

Equation (17) is of type $Acos\theta$ - $Bsin\theta$ = $C$, and can be solved as follows:

$$A\,cos\theta = C + B\,sin\theta \qquad (18)$$

$$A^2 \cos^2\theta = (C + B\,sin\theta)^2 \qquad (19)$$

$$A^2(1 - \sin^2\theta) = C^2 + 2BCsin\theta + B^2 sin^2\theta \qquad (20)$$

$$(A^2 + B^2)sin^2\theta + 2BCsin\theta + (C^2 - A^2) = 0 \qquad (21)$$

Equation (21) is a quadratic equation and can be solved for $\theta$. The equation can be solved in any suitable manner known in the art. As such, the articulation angle $\theta$ can be determined based on the first set of parameters, the second set of parameters, and the coupling forces $F_{xc}$ and $F_{yc}$.

Once the articulation angle $\theta$ has been determined, the equations above can also be used to determine the longitudinal acceleration $a_{x2}$ and the lateral acceleration $a_{y2}$ of the trailing unit **110-2** in cases that the first set of parameters further comprises the yaw acceleration $\ddot{\psi}_1$ of the tractor unit **110-1**. In particular, using equation (12), the longitudinal acceleration $a_{x2}$ of the trailing unit **110-2** can be determined based on the determined articulation angle $\theta$, the longitudinal acceleration $a_{x1}$ of the tractor unit **110-1**, the lateral acceleration $a_{y1}$ of the tractor unit **110-1**, the yaw acceleration $\ddot{\psi}_1$ of the tractor unit **110-1**, and the distance $dr_1$. Using equation (13), the lateral acceleration $a_{y2}$ of the trailing unit **110-2** can be determined based on the determined articulation angle $\theta$, the longitudinal acceleration $a_{x1}$ of the tractor unit **110-1**, the lateral acceleration $a_{y1}$ of the tractor unit **110-1**, the yaw acceleration $\ddot{\psi}_1$ of the tractor unit **110-1**, the distance $dr_1$, and distance $dr_2$. Once the lateral acceleration $a_{y2}$ of the trailing unit **110-2** has determined, equation (4) could be used to determine the lateral tyre force $F_{yt2}$ of the trailing unit **110-2**.

As such, previously unknown parameters such as the articulation angle $\theta$, the longitudinal acceleration $a_{x2}$ of the trailing unit **110-2**, and the lateral acceleration $a_{y2}$ of the trailing unit **110-2** can be estimated based on parameters that are already available.

As discussed above, the longitudinal coupling force $F_{xc}$ and the lateral coupling force $F_{yc}$ between the tractor unit **110-1** and the trailing unit **110-2** can be determined using equations (1) and (2). In this case, the longitudinal tyre force $F_{xt1}$ of the tractor unit **110-1**, the lateral tyre force $F_{yt1}$ of the tractor unit **110-1**, and the mass $m_1$ of the tractor unit **110-1** are acquired. In this case, the tyre forces $F_{xt1}$ and $F_{yt1}$ are sums of the respective tyre forces on the tractor unit **110-1**. Using equation (1) (or equation (14)), the longitudinal coupling force $F_{xc}$ can be determined based on the longitudinal acceleration $a_{x1}$ of the tractor unit **110-1**, the sum of longitudinal tyre forces $F_{xt1}$ on the tractor unit **110-1**, and the mass of the tractor unit **110-1**. Similarly, using equation (2) (or equation (15)), the lateral coupling force $F_{yc}$ can be determined based on the lateral acceleration $a_{y1}$ of the tractor unit **110-1**, the sum of lateral tyre forces $F_{yt1}$ on the tractor unit **110-1**, and the mass of the tractor unit **110-1**. As such, the coupling forces $F_{xc}$ and $F_{yc}$ can be determined based on known parameters in the case that they are not directly measurable.

This approach can be implemented in a number of different ways. In particular, the newly determined parameters (for example, the articulation angle $\theta$, the longitudinal acceleration $a_{x2}$ of the trailing unit **110-2**, the lateral acceleration $a_{y2}$ of the trailing unit **110-2**, the longitudinal coupling force $F_{xc}$, and the lateral coupling force $F_{yc}$) can be used as an input to an IMU for motion management of the vehicle combination **100**.

In one approach, this may be a "soft" IMU for use in the case that the second unit does not provide any measurements, which is often the case in traditional vehicle combinations. Such a soft IMU could be implemented in the control unit **140-1** of the tractor unit **110-1,** and could therefore be a backup in case of a communication problem between IMUs of the individual units, or failure or low accuracy of a primary IMU of the vehicle.

In another approach, this may be implemented a redundant IMU when the trailing unit **110-2** possesses an individual IMU, for example implemented in the control unit **140-2.** The determined parameters can be used to verify corresponding parameters of a separate vehicle motion or localization unit, a primary IMU of the vehicle, or GNSS based sensor equipment. For example, the determined parameters may be compared to corresponding parameters of a separate system to determine if the values of the separate system are within a reasonable and/or acceptable range of the determined parameters. This increases the reliability of measurements and provides a solution for fault detection and mitigation, meaning that safe operation of vehicle combinations can be ensured.

As such, a method may be provided in which a first set of parameters relating to the tractor unit **110-1** and a second set of parameters relating the trailing unit **110-2** are acquired, and a third set of parameters relating to the trailing unit **110-2** is determined based on the acquired first and second sets of parameters. The third set of parameters (for example, the articulation angle $\theta$, the longitudinal acceleration $a_{x2}$ of the trailing unit **110-2,** the lateral acceleration $a_{y2}$ of the trailing unit **110-2,** the longitudinal coupling force $F_{xc,}$ and the lateral coupling force $F_{yc}$) can then be used as an input to an IMU for motion management of the vehicle combination **100,** or to verify corresponding parameters of a separate vehicle motion or localization unit, a primary IMU of the vehicle combination **100,** or GNSS based sensor equipment.

As discussed above, the method **200** may be implemented by processing circuitry of the control unit **140-1** of the tractor unit **110-1,** or by processing circuitry of the control unit **140-2** of the trailing unit **110-2.** In instances where the method is performed by the control unit **140-1** of the tractor unit **110-1,** the newly determined parameters may be stored in a memory associated with the control unit **140-1** of the tractor unit **110-1.** It may therefore be ensured that the newly determined parameters are still available from the tractor unit **110-1** if communication to the trailing unit **110-2** is degraded or partially lost. In this way, parameters of the trailing unit **110-2** are available even when communication is hindered. In instances where the method is performed by the control unit **140-2** of the trailing unit **110-2,** the newly determined parameters may be provided as a redundancy for determination of parameters by the trailing unit **110-2,** for example an IMU of the trailing unit **110-2.**

FIG. 3 is a schematic diagram of a computer system **300** for implementing examples disclosed herein. In particular, the computer system **300** may, according to some examples, be configured to cause performance of the method **200 of FIG.** 2 and/or to be comprised in the control unit **140 of FIG. 1.** The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present invention as defined by the appended claims. In the drawings and specification, there have been disclosed aspects for purposes of illustration only and not for purposes of limitation, the scope of the disclosure being set forth in the following claims.

**Claims**

1. A computer system (300) comprising processing circuitry configured to:

   acquire a first set of parameters relating to a first unit (110-1) of a vehicle combination (100), the first set of parameters comprising a longitudinal acceleration of the first unit (110-1), a lateral acceleration of the first unit (110-1), a yaw rate of the first unit (110-1), and a first distance between the centre of gravity of the first unit (110-1) and a coupling point between the first unit (110-1) and a second unit (110-2) of the vehicle combination (100);
   acquire a second set of parameters relating to the second unit (110-2), the second set of parameters comprising a longitudinal tyre force of the second unit (110-2), a mass of the second unit (110-2), and a second distance between the centre of gravity of the second unit (110-2) and the coupling point;
   acquire a longitudinal coupling force and a lateral coupling force between the first unit (110-1) and the second unit (110-2); and
   determine an articulation angle between the first unit (110-1) and the second unit (110-2) based on the acquired first set of parameters, second set of parameters, longitudinal coupling force, and lateral coupling force.

2. The computer system (300) of claim 1, wherein:

   the first set of parameters further comprises a yaw acceleration of the first unit (110-1); and
   the processing circuitry is further configured to determine a longitudinal acceleration of the second unit (110-2) and/or a lateral acceleration of the second unit (110-2) based on the acquired first set of parameters, the acquired second set of parameters, and the determined articulation angle.

3. The computer system (300) of claim 2, wherein the processing circuitry is configured to determine the longitudinal acceleration of the second unit (110-2) based on the determined articulation angle, the longitudinal acceleration of the first unit (110-1), the lateral acceleration of the first unit (110-1), the yaw acceleration of the first unit (110-1), and the first distance.

4. The computer system (300) of claim 2 or 3, wherein the processing circuitry is configured to determine the lateral acceleration of the second unit (110-2) based on the determined articulation angle, the longitudinal acceleration of the first unit (110-1), the lateral acceleration of the first unit (110-1), the yaw acceleration of the first unit (110-1), the distance between the centre of gravity of the first unit (110-1) and the coupling point, and the second distance.

5. The computer system (300) of any of claims 2 to 4, wherein the processing circuitry is further configured to use the longitudinal coupling force, the lateral coupling force, the articulation angle, the longitudinal acceleration of the second unit (110-2) and/or the lateral acceleration of the second unit (110-2) as an input to an inertial measurement unit, IMU, for motion management of the vehicle combination (100).

6. The computer system (300) of any of claims 2 to 5, wherein the processing circuitry is configured to use the longitudinal coupling force, the lateral coupling force, the articulation angle, the longitudinal acceleration of the second unit (110-2) and/or the lateral acceleration of the second unit (110-2) to verify corresponding parameters of a separate vehicle motion or localization unit, a primary IMU of the vehicle combination (100), or global navigation satellite system,

GNSS, based sensor equipment.

7. The computer system (300) of any preceding claim, wherein the processing circuitry is configured to acquire the longitudinal coupling force and the lateral coupling force by:

acquiring a sum of longitudinal tyre forces of the first unit (110-1), a sum of lateral tyre forces of the first unit (110-1), and a mass of the first unit (110-1); and

determining the longitudinal coupling force and the lateral coupling force based on the acquired longitudinal acceleration of the first unit (110-1), lateral acceleration of the first unit (110-1), sum of longitudinal tyre forces, sum of lateral tyre forces, and mass of the first unit.

8. The computer system (300) of any preceding claim, wherein the processing circuitry is configured to acquire at least some of the first set of parameters from a sensor system of the first unit (110-1) of the vehicle combination (100).

9. The computer system (300) of any preceding claim, wherein the processing circuitry is configured to acquire the longitudinal tyre force of the second unit (110-2) from a braking system and/or propulsion system of the second unit (110-2).

10. The computer system (300) of any preceding claim, wherein the computer system is an electronic control unit, ECU, (140-1) of the first unit (110-1), and the longitudinal coupling force, the lateral coupling force, the articulation angle, the longitudinal acceleration of the second unit (110-2) and/or the lateral acceleration of the second unit (110-2) are stored in a memory associated with the ECU (140-1) of the first unit (110-1).

11. The computer system (300) of any preceding claim, wherein the computer system is an electronic control unit, ECU, (140-2) of the second unit (110-2), wherein the processing circuitry is configured to use the longitudinal coupling force, the lateral coupling force, the articulation angle, the longitudinal acceleration of the second unit (110-2) and/or the lateral acceleration of the second unit (110-2) as a redundancy for determination of parameters by the second unit (110-2).

12. A vehicle (100) comprising the computer system (300) of any preceding claim.

13. A computer-implemented method (200) comprising:

acquiring (202), by processing circuitry of a computer system (300), a first set of parameters relating to a first unit (110-1) of a vehicle combination (100), the first set of parameters comprising a longitudinal acceleration of the first unit (110-1), a lateral acceleration of the first unit (110-1), a yaw rate of the first unit (110-1), and a distance between the centre of gravity of the first unit (110-1) and a coupling point between the first unit (110-1) and the second unit (110-2);

acquiring (204), by the processing circuitry, a second set of parameters relating to a second unit (110-2) of the vehicle combination (100), the second set of parameters comprising a longitudinal tyre force of the second unit (110-2), a mass of the second unit (110-2), and a distance between the centre of gravity of the second unit (110-2) and the coupling point; and

acquiring (206), by the processing circuitry, a longitudinal coupling force and a lateral coupling force between the first unit (110-1) and the second unit (110-2); and

determining (208), by the processing circuitry, an articulation angle between the first unit (110-1) and the second unit (110-2) based on the acquired first set of parameters, second set of parameters, longitudinal coupling force, and lateral coupling force.

14. A computer program product comprising program code for performing, when executed by processing circuitry, the computer-implemented method (200) of claim 13.

15. A non-transitory computer-readable storage medium comprising instructions, which when executed by processing circuitry, cause the processing circuitry to perform the computer-implemented method (200) of claim 13.

**Patentansprüche**

1. Rechnersystem (300), umfassend Verarbeitungsschaltung, die zu Folgendem konfiguriert ist:

Erfassen eines ersten Satzes von Parametern, die sich auf eine erste Einheit (110-1) einer Fahrzeugkombination (100) beziehen, der erste Satz von Parametern umfassend eine Längsbeschleunigung der ersten Einheit (110-1), eine Querbeschleunigung der ersten Einheit (110-1), eine Gierrate der ersten Einheit (110-1) und einen ersten Abstand zwischen dem Schwerpunkt der ersten Einheit (110-1) und einem Kupplungspunkt zwischen der ersten Einheit (110-1) und einer zweiten Einheit (110-2) der Fahrzeugkombination (100);

Erfassen eines zweiten Satzes von Parametern, die sich auf die zweite Einheit (110-2) beziehen, der zweite Satz von Parametern umfassend eine Längsreifenkraft der zweiten Einheit (110-2), eine Masse der zweiten Einheit (110-2) und einen zweiten Abstand zwischen dem Schwerpunkt der zweiten Einheit (110-2) und dem Kupplungspunkt;

Erfassen einer Längskupplungskraft und einer Querkupplungskraft zwischen der ersten Einheit (110-1) und der zweiten Einheit (110-2); und

Bestimmen eines Knickwinkels zwischen der ersten Einheit (110-1) und der zweiten Einheit (110-2) basierend auf dem erfassten ersten Satz von Parametern, dem zweiten Satz von Parametern, der Längskupplungskraft und der Querkupplungskraft.

2. Rechnersystem (300) nach Anspruch 1, wobei:

Der erste Satz von Parametern ferner eine Gierbeschleunigung der ersten Einheit (110-1) umfasst; und die Verarbeitungsschaltung ferner konfiguriert ist, um eine Längsbeschleunigung der zweiten Einheit (110-2) und/oder eine Querbeschleunigung der zweiten Einheit (110-2) anhand des erfassten ersten und zweiten Satzes von Parametern sowie des bestimmten Knickwinkels zu bestimmen.

3. Rechnersystem (300) nach Anspruch 2, wobei die Verarbeitungsschaltung konfiguriert ist, um die Längsbeschleunigung der zweiten Einheit (110-2) basierend auf dem bestimmten Knickwinkel, der Längsbeschleunigung der ersten Einheit (110-1), der Querbeschleunigung der ersten Einheit (110-1), der Gierbeschleunigung der ersten Einheit (110-1) und der ersten Entfernung zu bestimmen.

4. Rechnersystem (300) nach Anspruch 2 oder 3, wobei die Verarbeitungsschaltung so konfiguriert ist, um die Querbeschleunigung der zweiten Einheit (110-2) basierend auf dem bestimmten Knickwinkel, der Längsbeschleunigung der ersten Einheit (110-1), der Querbeschleunigung der ersten Einheit (110-1), der Gierbeschleunigung der ersten Einheit (110-1), dem Abstand zwischen dem Schwerpunkt der ersten Einheit (110-1) und dem Kupplungspunkt und dem zweiten Abstand zu bestimmen.

5. Rechnersystem (300) nach einem der Ansprüche 2 bis 4, wobei die Verarbeitungsschaltung ferner konfiguriert ist, um die longitudinale Kupplungskraft, die laterale Kupplungskraft, den Knickwinkel, die longitudinale Beschleunigung der zweiten Einheit (110-2) und/oder die laterale Beschleunigung der zweiten Einheit (110-2) als Eingang für eine Inertialmesseinheit (IMU) für Bewegungsmanagement der Fahrzeugkombination (100) zu verwenden.

6. Rechnersystem (300) nach einem der Ansprüche 2 bis 5, wobei die Verarbeitungsschaltung konfiguriert ist, um die longitudinale Kupplungskraft, die laterale Kupplungskraft, den Knickwinkel, die longitudinale Beschleunigung der zweiten Einheit (110-2) und/oder die laterale Beschleunigung der zweiten Einheit (110-2) zu verwenden, um entsprechende Parameter einer separaten Fahrzeugbewegungs- oder -lokalisierungseinheit, einer primären IMU der Fahrzeugkombination (100) oder einer auf dem globalen Navigationssatellitensystem (GNSS) basierenden Sensorausrüstung zu verifizieren.

7. Rechnersystem (300) nach einem der vorherigen Ansprüche, wobei die Verarbeitungsschaltung konfiguriert ist, um die Längskupplungskraft und die Querkupplungskraft zu erfassen, durch:

Erfassen einer Summe von Längsreifenkräften der ersten Einheit (110-1), einer Summe von Querreifenkräften der ersten Einheit (110-1) und einer Masse der ersten Einheit (110-1); und

Bestimmen der Längskupplungskraft und der Querkupplungskraft basierend auf der erfassten Längsbeschleunigung der ersten Einheit (110-1), der Querbeschleunigung der ersten Einheit (110-1), der Summe der Längsreifenkräfte, der Summe der Querreifenkräfte und der Masse der ersten Einheit.

8. Rechnersystem (300) nach einem der vorherigen Ansprüche, wobei die Verarbeitungsschaltung konfiguriert ist, um zumindest einige Parameter des ersten Satzes von einem Sensorsystem der ersten Einheit (110-1) der Fahrzeugkombination (100) zu erfassen.

9. Rechnersystem (300) nach einem der vorherigen Ansprüche, wobei die Verarbeitungsschaltung konfiguriert ist, um die longitudinale Reifenkraft der zweiten Einheit (110-2) von einem Bremssystem und/oder einem Antriebssystem der zweiten Einheit (110-2) zu erfassen.

10. Rechnersystem (300) nach einem der vorherigen Ansprüche, wobei das Rechnersystem eine elektronische Steuereinheit (ECU) (140-1) der ersten Einheit (110-1) ist, und die Längskupplungskraft, die Querkupplungskraft, der Knickwinkel, die Längsbeschleunigung der zweiten Einheit (110-2) und/oder die Querbeschleunigung der zweiten Einheit (110-2) in einem Speicher gespeichert sind, der mit der ECU (140-1) der ersten Einheit (110-1) assoziiert ist.

11. Rechnersystem (300) nach einem der vorherigen Ansprüche, wobei das Rechnersystem eine elektronische Steuereinheit (ECU) (140-2) der zweiten Einheit (110-2) ist, wobei die Verarbeitungsschaltung konfiguriert ist, um die Längskupplungskraft, die Querkupplungskraft, den Knickwinkel, die Längsbeschleunigung der zweiten Einheit (110-2) und/oder die Querbeschleunigung der zweiten Einheit (110-2) als Redundanz für die Bestimmung von Parametern durch die zweite Einheit (110-2) zu verwenden.

12. Fahrzeug (100), umfassend das Rechnersystem (300) nach einem vorherigen Anspruch.

13. Rechnerimplementiertes Verfahren (200), umfassend:

Erfassen (202), durch Verarbeitungsschaltung eines ersten Rechnersystems (300), eines ersten Satzes von Parametern, die sich auf eine erste Einheit (110-1) einer Fahrzeugkombination (100) beziehen, der erste Satz von Parametern umfassend eine Längsbeschleunigung der ersten Einheit (110-1), eine Querbeschleunigung der ersten Einheit (110-1), eine Gierrate der ersten Einheit (110-1) und einen ersten Abstand zwischen dem Schwerpunkt der ersten Einheit (110-1) und einem Kupplungspunkt zwischen der ersten Einheit (110-1) und einer zweiten Einheit (110-2);
Erfassen (204), durch die Verarbeitungsschaltung, eines zweiten Satzes von Parametern, die sich auf eine zweite Einheit (110-2) der Fahrzeugkombination (100) beziehen, der zweite Satz von Parametern umfassend eine Längsreifenkraft der zweiten Einheit (110-2), eine Masse der zweiten Einheit (110-2) und einen Abstand zwischen dem Schwerpunkt der zweiten Einheit (110-2) und dem Kupplungspunkt; und
Erfassen (206), durch die Verarbeitungsschaltung, einer Längskupplungskraft und einer Querkupplungskraft zwischen der ersten Einheit (110-1) und der zweiten Einheit (110-2); und
Bestimmen (208), durch die Verarbeitungsschaltung, eines Knickwinkels zwischen der ersten Einheit (110-1) und der zweiten Einheit (110-2) basierend auf dem erfassten ersten Satz von Parametern, dem zweiten Satz von Parametern, der Längskupplungskraft und der Querkupplungskraft.

14. Rechnerprogrammprodukt, umfassend Programmcode, um bei Ausführung durch eine Verarbeitungsschaltung das rechnerimplementierte Verfahren (200) nach Anspruch 13 durchzuführen.

15. Nicht-transitorisches, computerlesbares Speichermedium, umfassend Anweisungen, die, wenn sie von einer Verarbeitungsschaltung ausgeführt werden, die Verarbeitungsschaltung veranlassen, das rechnerimplementierte Verfahren (200) nach Anspruch 13 durchzuführen.

## Revendications

1. Système informatique (300) comprenant un circuit de traitement configuré pour :

acquérir un premier ensemble de paramètres relatifs à une première unité (110-1) d'une combinaison de véhicules (100), le premier ensemble de paramètres comprenant une accélération longitudinale de la première unité (110-1), une accélération latérale de la première unité (110-1), une vitesse de lacet de la première unité (110-1) et une première distance entre le centre de gravité de la première unité (110-1) et un point d'accouplement entre la première unité (110-1) et une deuxième unité (110-2) de la combinaison de véhicules (100) ;
acquérir un second ensemble de paramètres relatifs à la seconde unité (110-2), le second ensemble de paramètres comprenant une force de pneu longitudinale de la seconde unité (110-2), une masse de la seconde unité (110-2) et une distance entre le centre de gravité de la seconde unité (110-2) et le point d'accouplement ;
acquérir une force d'accouplement longitudinale et une force d'accouplement latérale entre la première unité (110-1) et la seconde unité (110-2) ; et
déterminer un angle d'articulation entre la première unité (110-1) et la seconde unité (110-2) sur la base du premier ensemble de paramètres, du second ensemble de paramètres, de la force d'accouplement longitudinale et de la force d'accouplement latérale acquis.

2. Système informatique (300) selon la revendication 1, dans lequel :

le premier ensemble de paramètres comprend en outre une accélération de lacet de la première unité (110-1) ; et
le circuit de traitement est en outre configuré pour déterminer une accélération longitudinale de la seconde unité (110-2) et/ou une accélération latérale de la seconde unité (110-2) sur la base du premier ensemble de paramètres acquis, du second ensemble de paramètres acquis et de l'angle d'articulation déterminé.

3. Système informatique (300) selon la revendication 2, dans lequel le circuit de traitement est configuré pour déterminer l'accélération longitudinale de la seconde unité (110-2) en fonction de l'angle d'articulation déterminé, de l'accélération longitudinale de la première unité (110-1), de l'accélération latérale de la première unité (110-1), de l'accélération de lacet de la première unité (110-1) et de la première distance.

4. Système informatique (300) selon la revendication 2 ou 3, dans lequel le circuit de traitement est configuré pour déterminer l'accélération latérale de la seconde unité (110-2) en fonction de l'angle d'articulation déterminé, de l'accélération longitudinale de la première unité (110-1), de l'accélération latérale de la première unité (110-1), de l'accélération de lacet de la première unité (110-1), de la distance entre le centre de gravité de la première unité (110-1) et le point d'accouplement, et de la seconde distance.

5. Système informatique (300) selon l'une quelconque des revendications 2 à 4, dans lequel le circuit de traitement est en outre configuré pour utiliser la force d'accouplement longitudinale, la force d'accouplement latérale, l'angle d'articulation, l'accélération longitudinale de la seconde unité (110-2) et/ou l'accélération latérale de la seconde unité (110-2) en tant qu'entrée dans une unité de mesure inertielle (IMU) pour la gestion du mouvement de la combinaison de véhicules (100).

6. Système informatique (300) selon l'une quelconque des revendications 2 à 5, dans lequel le circuit de traitement est configuré pour utiliser la force d'accouplement longitudinale, la force d'accouplement latérale, l'angle d'articulation, l'accélération longitudinale de la seconde unité (110-2) et/ou l'accélération latérale de la seconde unité (110-2) pour vérifier les paramètres correspondants d'une unité de mouvement ou de localisation séparée du véhicule, d'une IMU primaire de la combinaison de véhicules (100), ou d'un équipement de capteur fondé sur le système mondial de navigation par satellite (GNSS).

7. Système informatique (300) selon l'une quelconque des revendications précédentes, dans lequel le circuit de traitement est configuré pour acquérir la force d'accouplement longitudinale et la force d'accouplement latérale par :

l'acquisition d'une somme des forces de pneu longitudinales de la première unité (110-1), d'une somme des forces de pneu latérales de la première unité (110-1) et d'une masse de la première unité (110-1) ; et
la détermination de la force d'accouplement longitudinale et de la force d'accouplement latérale sur la base de l'accélération longitudinale de la première unité (110-1), de l'accélération latérale de la première unité (110-1), de la somme des forces de pneu longitudinales, de la somme des forces de pneu latérales et de la masse de la première unité acquises.

8. Système informatique (300) selon l'une quelconque des revendications précédentes, dans lequel le circuit de traitement est configuré pour acquérir au moins une partie du premier ensemble de paramètres à partir d'un système de capteurs de la première unité (110-1) de la combinaison de véhicules (100).

9. Système informatique (300) selon l'une quelconque des revendications précédentes, dans lequel le circuit de traitement est configuré pour acquérir la force de pneu longitudinale de la seconde unité (110-2) à partir d'un système de freinage et/ou d'un système de propulsion de la seconde unité (110-2).

10. Système informatique (300) selon l'une quelconque des revendications précédentes, dans lequel le système informatique est une unité de commande électronique (ECU) (140-1) de la première unité (110-1), et la force d'accouplement longitudinale, la force d'accouplement latérale, l'angle d'articulation, l'accélération longitudinale de la seconde unité (110-2) et/ou l'accélération latérale de la seconde unité (110-2) sont stockés dans une mémoire associée à l'ECU (140-1) de la première unité (110-1).

11. Système informatique (300) selon l'une quelconque des revendications précédentes, dans lequel le système informatique est une unité de commande électronique, ECU, (140-2) de la seconde unité (110-2), dans lequel le circuit de traitement est configuré pour utiliser la force d'accouplement longitudinale, la force d'accouplement latérale, l'angle d'articulation, l'accélération longitudinale de la seconde unité (110-2) et/ou l'accélération latérale de la seconde unité (110-2) comme une redondance pour la détermination de paramètres par la seconde unité (110-2).

12. Véhicule (100) comprenant le système informatique (300) selon l'une quelconque des revendications précédentes.

13. Procédé mis en œuvre par ordinateur (200) comprenant :

l'acquisition (202), par le circuit de traitement d'un système informatique (300), d'un premier ensemble de paramètres relatifs à une première unité (110-1) d'une combinaison de véhicules (100), le premier ensemble de paramètres comprenant une accélération longitudinale de la première unité (110-1), une accélération latérale de la première unité (110-1), une vitesse de lacet de la première unité (110-1), et une distance entre le centre de gravité de la première unité (110-1) et un point d'accouplement entre la première unité (110-1) et la seconde unité (110-2) ;
l'acquisition (204), par le circuit de traitement, d'un second ensemble de paramètres relatifs à une seconde unité (110-2) de la combinaison de véhicules (100), le second ensemble de paramètres comprenant une force de pneu longitudinale de la seconde unité (110-2), une masse de la seconde unité (110-2) et une distance entre le centre de gravité de la seconde unité (110-2) et le point d'accouplement ; et
l'acquisition (206), par le circuit de traitement, d'une force d'accouplement longitudinale et d'une force d'accouplement latérale entre la première unité (110-1) et la seconde unité (110-2) ; et
la détermination, (208), par le circuit de traitement, d'un angle d'articulation entre la première unité (110-1) et la seconde unité (110-2) sur la base du premier ensemble de paramètres, du second ensemble de paramètres, de la force d'accouplement longitudinale et de la force d'accouplement latérale acquis.

14. Produit de programme informatique comprenant un code de programme pour exécuter, lorsqu'il est exécuté par le circuit de traitement, le procédé mis en œuvre par ordinateur (200) selon la revendication 13.

15. Support de stockage non transitoire lisible par ordinateur comprenant des instructions qui, lorsqu'elles sont exécutées par le circuit de traitement, amènent le circuit de traitement à exécuter le procédé mis en œuvre par ordinateur (200) selon la revendication 13.

**FIG. 1**

<u>200</u>

```
┌─────────────────────────────────────────────────┐
│ Acquiring a first set of parameters relating to   │
│ a first unit of a vehicle combination             │──── 202
└─────────────────────────────────────────────────┘
                      │
                      ▼
┌─────────────────────────────────────────────────┐
│ Acquiring a second set of parameters relating to  │
│ a second unit of the vehicle combination          │──── 204
└─────────────────────────────────────────────────┘
                      │
                      ▼
┌─────────────────────────────────────────────────┐
│ Acquiring a longitudinal coupling force and a      │
│ lateral coupling force between the first unit and  │──── 206
│ the second unit                                    │
└─────────────────────────────────────────────────┘
                      │
                      ▼
┌─────────────────────────────────────────────────┐
│ Determining an articulation angle between the     │
│ first unit and the second unit based on the        │
│ acquired first set of parameters, second set of    │──── 208
│ parameters, longitudinal coupling force, and       │
│ lateral coupling force                             │
└─────────────────────────────────────────────────┘
```

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AMIN HABIBNEJAD KORAYEM**. State and Parameter Estimation of Vehicle-Trailer Systems. *University of Waterloo*, 05 March 2021
- State Estimation and Application of the Hitch Angle of a Semitrailer Train Under Full Working Conditions Based on Multimodel Information Fusion. **GUANG XIA et al.** IEEE Transactions on Vehicular Technology. IEEE, 24 February 2022, vol. 71

- **LIANG CHU et al.** Estimation of Articulation Angle for Tractor Semi-trailer Based on State Observer. *2010 International Conference on Measuring Technology and Mechatronics Automation*, 13 March 2010